# EUROPEAN PATENT SPECIFICATION

(11) **EP 0 584 155 B1**
(45) Date of publication and mention of the grant of the patent: **07.02.1996**
(21) Application number: 92910101.2
(22) Date of filing: 13.05.1992
(51) Int. Cl.: E05F 15/00, H02P 7/00

(54) **A MOTOR REVERSE SYSTEM**
MOTORREVERSIERSYSTEM
SYSTEME D'INVERSION DE MOTEUR

(30) Priority: 14.05.1991 GB 9110372
(43) Date of publication of application: 02.03.1994
(73) Proprietor: VOLEX GROUP plc, Warrington WA3 7JX (GB)
(72) Inventor: CHAISTY, Peter, Droylsden, Manchester M35 6RG (GB); NOBLE, Mark, St. Helens, Merseyside WA10 4JW (GB)
(74) Representative: Downey, William Gerrard
(86) International application number: GB9200862
(87) International publication number: WO9220891

(56) References cited:
- EP-A- 0 267 064
- DE-A- 3 332 813
- DE-A- 3 532 078
- DE-A- 3 832 941
- US-A- 4 581 900

## Description

The present invention relates to a motor reverse system.

The system is particularly, but not exclusively, applicable to closure members such as motor driven doors, windows and sunroofs.

Reverse mechanisms for motor driven automobile window back-off are already known (for exemple DE-A-3 832 941 and DE-A-3 532 078) but such mechanisms can impart an unacceptable force to a trapped limb, for example, and may be susceptible to wear in the mechanism during its life affecting operation.

According to the present invention, there is provided a motor reverse system comprising means for sensing the current in the motor to which the system is in use connected, characterised by first and second means for sensing resistance to the motion of an object being driven by the motor, said first means comprising a peak current detector for determining current instantaneously, drawn by the motor on switch on, comparator means for comparing the peak current detected with the actual motor current value during normal operation, a backoff circuit arranged to operate when the actual motor current equals or exceeds the peak current, said second means comprising filter means arranged to provide two variables from the motor current one of which responds faster than the other to rates of change of motor current, whereby if the motor slows and the rate of change of motor current is sufficient such that a graphical representation of said one variable plotted with respect to time crosses a graphical representation of said other variable plotted with respect to time, the backoff circuit operates.

The "backoff" function can be implemented in a number of ways.

When the backoff circuit operates the current to the motor is reversed for a time.

In a preferred embodiment of the invention, the current in the motor is sensed by a current sensing track. This track forms in conjunction with the motor a potential divider from which a signal is fed to an amplifier. The output from the amplifier is fed directly and simultaneously to the input of the filter means and sample and hold means. In a first operating mode for an automobile window wind up mechanism, the sample and hold means store the peak stall current on motor switch on. This may vary depending on the mechanical condition of the mechanism and the automobile battery condition. If that stored signal is subsequently reached indicating a soft obstacle, a signal to activate the backoff means and associated further circuit to back off the window by a nominal amount. The window can then only be moved by switching the normal motor switch on again (either up or down). In a second operating mode, the other variable tracks the first mentioned variable. When a hard obstacle is encountered by the window, the slower reacting variable can no longer keep up with the other variable and the outputs from the two crossover. This is detected and the back off system activated as before. A limit switch deactivates the system as the window approaches the closed position to prevent back off as the window closes.

In order that the invention may be more clearly understood, one embodiment thereof will now be described, by way of example, with reference to the accompanying drawings, in which:-
Figure 1 shows a circuit arrangement for measuring a window winder motor current consumption,
Figure 2 shows a block circuit diagram of an arrangement for controlling a backoff for the motor of Figure 1,
Figure 3 shows variation of current with time for the motor of Figures 1 and 2 for a first given operating condition.
Figure 4 shows variation of current with time for the motor of Figures 1 and 2 for a second given operating condition.
Figure 5 shows variation of filter outputs with time in circuit of Figure 1 for the second operating condition of Figure 4. and
Figure 6 shows a partial, closed position, view of a window to be driven by the motor of Figure 1 and 2.

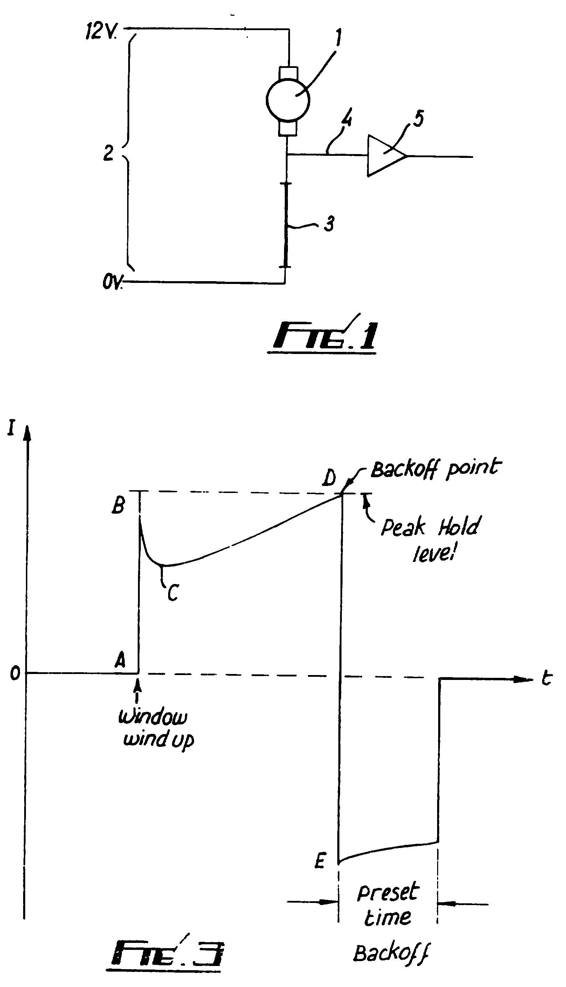

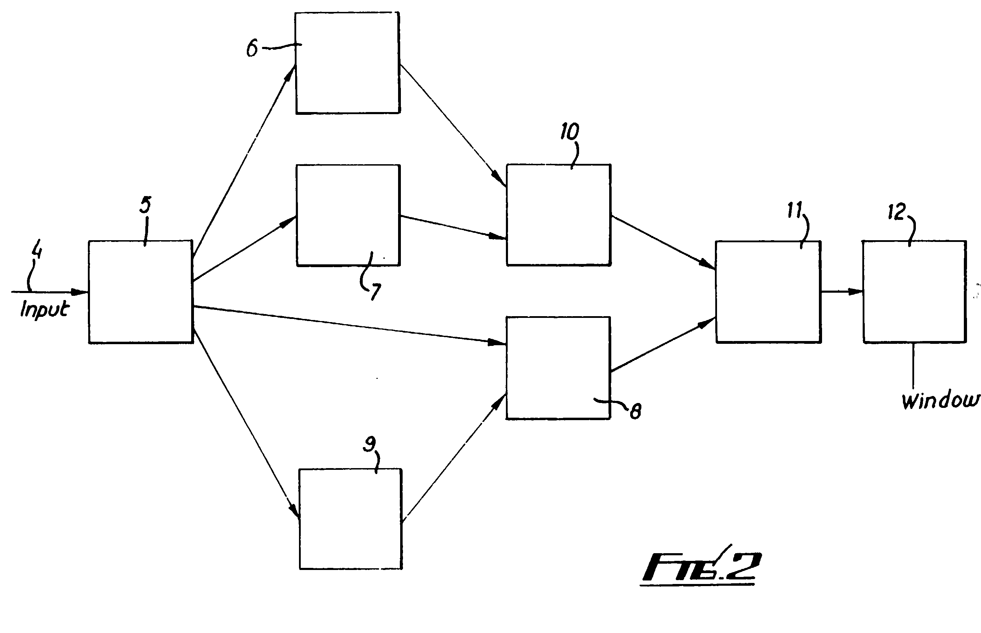

Referring to Figures 1 and 2, a window winder motor 1, draws current in operation from the usual 12v battery supply 2 of the vehicle. This current is monitored using a current sensing track 3 disposed in this supply circuit. The motor 1 and track 3 create a voltage divider and the output 4 from this divider representing the current drawn by the motor forms the input to an amplifier 5.

The output from the amplifier is fed to a low pass filter 6 having a short time constant, a low pass filter 7 having a long time constant, a comparator 8 and a sample and hold circuit 9. The outputs from the two filters 6 and 7 are fed to a second comparator 10. The first mentioned comparator also receives an input from the sample and hold circuit 9. The outputs from comparators 8 and 10 are fed to a backoff circuit 11 which, in conjunction with a further circuit 12 controls the backoff operation of the window (not shown in Figure 2).

The operation of the system is as follows. The voltage at the output of the amplifier 5 is used in two different ways. As the motor 1 starts up it is effectively in stall condition until it is at working speed. The output voltage on power up will be slightly lower than that at stall. This initial voltage is stored in the sample and hold circuit 9. In the first mode of operation, if the voltage at the output of the amplifier 5 rises above that at the output of the sample and hold circuit indicating a soft obstacle in the way of the window being wound up then the comparator 8 reacts by initiating the backoff circuit 11 to operate the further circuit 12 to stop and reverse the motor 1 for a preset time. As the start up current/voltage is sampled every time the window is wound up the system adjusts automatically to variations in the mechanical elements of the system caused by wear and tear and to battery condition.

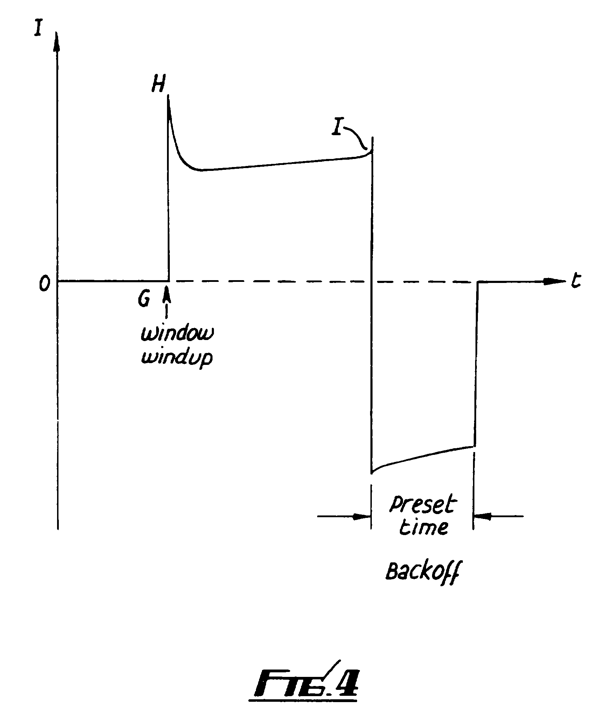

Motor current I variation with time t during this operation is shown in Figure 3. As the motor runs up to speed, current rises rapidly from point A to point B producing a start up current peak B from which, during normal operation, the current falls back to level C. When the obstacle is encountered current begins to rise again until it exceeds the stored start up peak level B when the motor is reversed by reversing the current for a preset time. The reversal point is shown at D and the reverse current at E.

When the motor 1 is in reverse, the circuits which detect motor stall are deactivated. The backoff circuit and the window will not operate again until, the switch controlling the window is released, and another signal is given via the motor switch (either up or down).

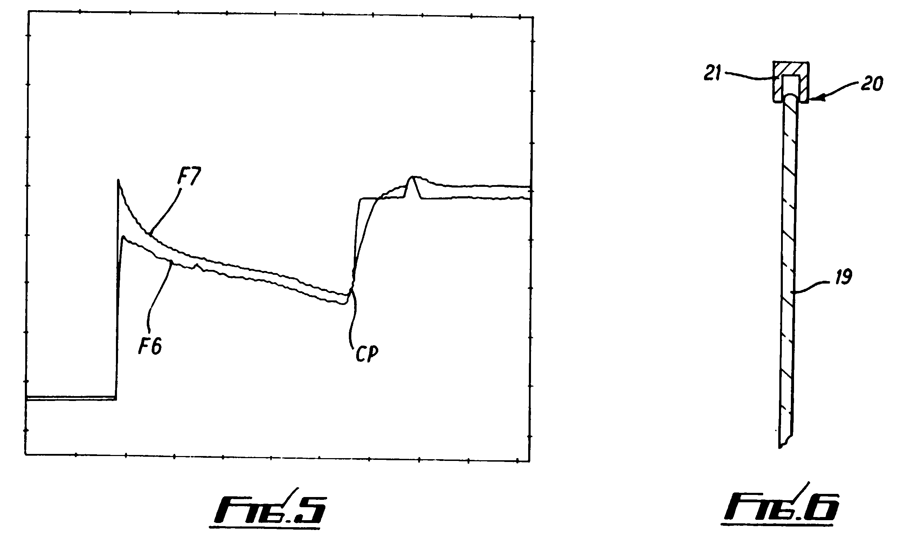

The output of the amplifier 5 is also fed into the two low pass filters 6 and 7. Filter 6 is fast reacting and is used mainly to rid the input signal of high frequency noise generated by the motor 1. This signal is then reduced by a certain percentage. Filter 7 is an integrating filter which tracks the output of the filter 6 with a delay due to the longer time constant. If the level of current taken by the motor rises slowly the output from filter 7 can track the output from filter 6. If the output from filter 6 rises at a greater rate, suggesting an obstruction, the output from filter 7 cannot keep up. The output from filter 6 crosses the output from filter 7. This condition is shown graphically in Figure 5, the output from filter 6 being referenced F6, that from filter 7 being referenced F7 and the crossover point CP. F6 and F7 are both plots against time. The plot of motor current against time for this mode of operation is shown in Figure 4. This is similar to that of Figure 3. Window wind up begins at point G, and current rises rapidly to point H. Normally winding takes place until point I when a fast rate of change indicates a hard obstacle. The current at this point is at a much lower level than that at H which is the stall position which indicates that the rite of change of current demand has increased sufficiently to activate the window back off circuit 11. Operation of this circuit 11 and further circuit 12 is as before and as before the window will not operate after backoff until the switch is released and pressed again.

Referring to Figure 6, to prevent the backoff circuit operating when the window 19 reaches the normally closed position, a limit switch 20 is disposed for operation by the window just before the window hits the end stop in the window frame 21. Operation of the switch 20 sends a signal to deactivate the input to the backoff circuitry allowing the window to close without backing off. It will be noted that the position of the switch 20 is such that no significant gap is left to allow anything to be caught in the window.

The above arrangement enables different types of obstacles to normal window closure to be catered for and also accommodates changes due to wear and tear and battery condition.

It will be appreciated that the above embodiment has been described by way of example only and that many variations are possible without departing from the scope of the invention. Although described in relation to-a window wind up motor, the back off arrangement could be used in any circumstance where the normal operation of a motor needs to be reversed to deal with an abnormal condition such as an obstacle. The arrangement may be implemented in software as well as hardware or a combination of the two.

## Claims

1. A motor reverse system comprising means (3) for sensing the current in the motor (1) to which the system is in use connected, characterised by first and second means for sensing resistance to the motion of an object being driven by the motor, said first means (9) comprising a peak current detector for determining current instantaneously drawn by the motor on switch on, comparator means (8,10) for comparing the peak current detected with the actual motor current value during normal operation, a backoff circuit (11) arranged to operate when the actual motor current equals or exceeds the peak current, said second means comprising filter means (6,7) arranged to provide two variables from the motor current one of which responds faster than the other to rates of change of motor current, whereby if the motor (1) slows and the rate of change of motor current is sufficient such that a graphical representation of said one variable plotted with respect to time crosses a graphical representation of said other variable plotted with respect to time, the backoff circuit (11) operates.

2. A motor reverse system as claimed in claim 1, in which when the backoff circuit (11) operates the current to the motor is reversed for a time.

3. A motor reverse system as claimed in claim 1 or 2, in which the means for sensing comprise a current sensing track (3).

4. A motor reverse system as claimed in claim 3, in which the track forms in conjunction with the motor a potential divider from which, in operation a signal is fed to an amplifier (5).

5. A motor reverse system as claimed in claim 4, in which the output from the amplifier is donnected to the input to the filter means and to sample and hold means (9).

6. A motor reverse system as claimed in claim 5, in which the sample and hold means (9) are operative to store the peak stall current on motor switch on.

7. A motor reverse system as claimed in claim 6, in which, the comparator means (8,10) is operative to compare the voltage at the output from the amplifier (5) with the voltage at the output of the sample and hold means (9) and to activate the backoff circuit (11) when the amplifier output voltage exceeds the output voltage of the sample and hold circuit in a first mode of operation of the system.

8. A motor reverse system as claimed in claim 7, in which a further circuit (12) is provided for stopping and reversing the motor (1) when the backoff circuit (11) is activated.

9. A motor reverse system as claimed in any preceding claim, in which the filter means comprises a first fast reacting filter (6) and a second integrating filter (7) operative to track the output of the first filter with a delay whereby in operation to provide the two variables from the motor current.

10. A motor reverse system as claimed in any preceding claim, in which a limit switch (20) is associated with the backoff circuit (11) operative to deactivate the input to the backoff circuit when an element driven by the motor reaches a predetermined position.

11. A closure system for a vehicle comprising a closure member, a motor (1) for driving the closure member (19) between open and closed positions and a motor reverse system for controlling the motor as claimed in any preceding claim.

## Patentansprüche

1. Motorreversiersystem, das Mittel (3) zum Detektieren des Stroms im Motor, mit dem das System bei seiner Verwendung verbunden ist, aufweist, gekennzeichnet durch erste und zweite Mittel zum Detektieren eines Widerstandes auf die Bewegung eines Gegenstandes, der durch den Motor angetrieben wird, wobei das erste Mittel (9) einen Spitzenstromdetektor zum Bestimmen des Stroms, der momentan durch den Motor gleich nach dem Einschalten gezogen wird, Komparatormittel (8,10) zum Vergleichen des detektierten Spitzenstroms mit dem tatsächlichen Motorstromwert während des normalen Betriebs, eine Rückführschaltung (11) aufweist, die so ausgebildet ist, daß sie arbeitet, wenn der tatsächliche Motorstrom dem Spitzenstrom gleich wird oder denselben übersteigt, wobei das zweite Mittel Filtermittel (6,7) aufweist, die so ausgebildet sind, daß sie zwei Variablen vom Motorstrom liefern, von denen die eine schneller als die andere auf Änderungsgeschwindigkeiten des Motorstroms reagiert, wodurch, wenn der Motor (1) langsamer wird und die Änderungsgeschwindigkeit des Motorstroms ausreichend ist, so daß eine grafische Darstellung der einen Variablen aufgetragen in bezug auf die Zeit eine grafische Darstellung der anderen Variablen kreuzt, die in bezug auf die Zeit aufgetragen ist, die Rückführschaltung (11) arbeitet.

2. Motorreversiersystem nach Anspruch 1, bei dem, wenn die Rückführschaltung (11) arbeitet, der Strom zum Motor für eine vorgegebene Zeit umgekehrt wird.

3. Motorreversiersystem nach Anspruch 1 oder 2, bei dem das Mittel zum Detektieren eine Stromdetektierspur oder -schiene (3) aufweist.

4. Motorreversiersystem nach Anspruch 3, bei der die Spur oder Schiene in Verbindung mit dem Motor einen Potentialteiler bildet, von dem beim Betrieb ein Signal einem Verstärker (5) zugeführt wird.

5. Motorreversiersystem nach Anspruch 4, bei dem der Ausgang des Verstärkers mit dem Eingang zu den Filtermitteln und zu Abtast- und Haltemitteln (9) verbunden ist.

6. Motorreversiersystem nach Anspruch 5, bei dem die Abtastund Haltemittel (9) so wirken, daß sie den Spitzenblokkierstrom unmittelbar nach dem Motoreinschalten speichern.

7. Motorreversiersystem nach Anspruch 6, bei dem die Komparatormittel (8,10) so arbeiten, daß sie die Spannung am Ausgang vom Verstärker (5) mit der Spannung am Ausgang der Abtast- und Haltemittel (9) vergleichen und die Rückführschaltung (11) aktivieren, wenn die Verstärkerausgangsspannung größer ist als die Ausgangsspannung der Halte-und Abtastschaltung in einer ersten Betriebsart des Systems.

8. Motorreversiersystem nach Anspruch 7, bei dem eine weitere Schaltung (12) vorgesehen ist, um den Motor (1) anzuhalten und zu reversieren, wenn die Rückführschaltung (11) aktiviert wird.

9. Motorreversiersystem nach einem vorangehenden Anspruch, bei dem die Filtermittel einen ersten schnell reagierenden Filter (6) und einen zweiten integrierenden Filter (7) aufweisen, der so arbeitet, daß er dem Ausgangssignal des ersten Filters mit einer Verzögerung folgt, wodurch beim Betrieb die beiden Variablen vom Motorstrom gebildet werden.

10. Motorreversiersystem nach einem vorangehenden Anspruch, bei dem ein Begrenzungsschalter (20) mit der Rückführschaltung (11) verknüpft ist, der so arbeitet, daß er das Eingangssignal zur Rückführschaltung deaktiviert, wenn ein durch den Motor angetriebenes Element eine vorbestimmte Stellung erreicht.

11. Schließsystem für ein Fahrzeug, das ein Schließglied, einen Motor (1) zum Antreiben des Schließgliedes (19) zwischen offenen und geschlossenen Stellungen und ein Motorreversiersystem zum Steuern des Motors, wie dies in einem vorhergehenden Anspruch beansprucht wurde, aufweist.

## Revendications

1. Système d'inversion de moteur comprenant des moyens (3) de détection du courant dans le moteur (1) auquel le système est connecté en fonctionnement, caractérisé par des premier et second moyens de détection de la résistance au déplacement d'un objet entraîné par le moteur, ledit premier moyen (9) comprenant un détecteur de courant crête permettant la détection du courant instantané traversant le moteur lors de la fermeture du circuit, un moyen de comparaison (8, 10) permettant de comparer le courant de pointe détecté avec la valeur réelle du courant du moteur pendant le fonctionnement normal, un circuit de dégagement (11) adapté pour fonctionner lorsque le courant réel du moteur égale ou dépasse le courant crête, ledit second moyen comprenant des moyens de filtrage (6, 7) pouvant délivrer deux variables de courant du moteur dont l'une répond plus vite que l'autre au taux de variation du courant du moteur, ce qui fait que, si le moteur (1) ralentit et que le taux de variation du courant du moteur est suffisant pour que la représentation graphique de ladite première variable en fonction du temps croise la représentation graphique de ladite autre variable en fonction du temps, le circuit de dégagement (11) fonctionne.

2. Système d'inversion de moteur selon la revendication 1, dans lequel, lorsque le circuit de dégagement (11) fonctionne, le courant vers le moteur est inversé pendant une certaine durée.

3. Système d'inversion de moteur selon la revendication 1 ou 2, dans lequel le moyen de mesure comprend une piste de détection du courant (3).

4. Système d'inversion de moteur selon la revendication 3, dans lequel la piste et le moteur forment par coopération un diviseur de potentiel à partir duquel, en fonctionnement, un signal est envoyé à un amplificateur (5).

5. Système d'inversion de moteur selon la revendication 4, dans lequel la sortie de l'amplificateur est réliée à l'entrée des moyens de filtrage et des moyens d'échantillonnage et de maintien (9).

6. Système d'inversion de moteur selon la revendication 5, dans lequel les moyens d'échantillonnage et de maintien (9) permettent de stocker le courant crête au blocage lors de la mise en route du moteur.

7. Système d'inversion de moteur selon la revendication 6, dans lequel le moyen de comparaison (8, 10) permet de comparer la tension. de sortie de l'amplificateur (5) avec la tension de sortie des moyens d'échantillonnage et de maintien (9) et d'activer le circuit de dégagement (11) lorsque la tension de sortie de l'amplificateur dépasse la tension de sortie des moyens d'échantillonnage et de maintien dans un premier mode de fonctionnement du système.

8. Système d'inversion de moteur selon la revendication 7, dans lequel un circuit supplémentaire (12) est fourni pour arrêter et inverser le moteur (1) lorsque le circuit de dégagement (11) est activé.

9. Système d'inversion de moteur selon l'une des revendications précédentes, dans lequel le moyen de filtrage comprend un premier filtre à réaction rapide (6) et un second filtre intégrateur (7) qui fonctionne en suivant la sortie du premier filtre avec un délai, de manière à délivrer en fonctionnement les deux variables du courant de moteur.

10. Système d'inversion de moteur selon l'une des revendications précédentes, dans lequel un commutateur de limite (20) est associé au circuit de dégagement (11) afin de déconnecter l'entrée du circuit de dégagement lorsqu'un organe entraîné par le moteur atteint une position prédéterminée.

11. Système de fermeture de véhicule, comprenant un organe de fermeture, un moteur (1) entraînant l'organe de fermeture (19) entre des positions ouverte et fermée et un système d'inversion de moteur qui commande le moteur selon l'une des revendications précédentes.
